# DEMANDE DE BREVET EUROPEEN

(11) **EP 3 388 158 A1**
(43) Date de publication de la demande: **17.10.2018**
(21) Numéro de dépôt: 18164054.1
(22) Date de dépôt: 26.03.2018
(51) Int. Cl.: B09B 3/00, A61G 17/00, A61G 17/04, B09B 5/00, C05F 1/02, A61G 99/00

(54) **DISPOSITIF MODULABLE DE COLLECTE, TRANSPORT, ENTREPOSAGE ET TREMPAGE LORS D'UN PROCESSUS D'HYDROLYSE ALCALINE POUR LES CADAVRES D'ANIMAUX FAMILIERS**

(30) Priorité: 14.04.2017 FR 1770382
(71) Demandeur: Bonvallot, Franck, 73190 Saint Baldoph (FR)
(72) Inventeur: Bonvallot, Franck, 73190 Saint Baldoph (FR)
(74) Mandataire: Croonenbroek, Thomas Jakob

(57) **Abrégé**

Dispositif modulable de collecte, transport, entreposage et trempage lors d'un processus d'hydrolyse alcaline pour des cadavres d'animaux familiers.

L'invention concerne un dispositif modulable (1) de collecte, transport, entreposage et trempage lors d'hydrolyse alcaline de cadavres d'animaux familiers utilisable pour la prise en charge de façon individuelle, séparée et identifiable, collective des cadavres.

Le dispositif (1) est un récipient modulable comportant une paroi pleine à hauteur réglable (9), une paroi supérieure à hauteur variable (6), plusieurs ouvertures dans des plans différents (10a, 10b, 10c), un système de guidage (11) pouvant le solidariser à une structure externe, des pieds (12) et poignées (13) permettant sa manutention horizontale comme un brancard, au moins deux roues éventuellement amovibles (16) permettant son déplacement comme un diable de manutention et des parois internes amovibles réglables (17) permettant de le fractionner en espaces séparés et identifiables.

Le dispositif (1), selon l'invention, est particulièrement destiné au domaine du traitement des cadavres d'animaux familiers.

## Description

La présente invention concerne un dispositif modulable de collecte, de transport, d'entreposage, de manipulation et de trempage lors du processus d'hydrolyse alcaline pour les cadavres d'animaux familiers.

Les cadavres d'animaux familiers peuvent être traités soit de façon individuelle, soit de façon collective, soit de façon séparée et identifiable.

Traditionnellement, juste après leur décès chaque cadavre d'animal familier est introduit individuellement dans un sac identifié et fermé hermétiquement et conservé sous couvert du froid jusqu'à leur collecte. La collecte est réalisée essentiellement dans les cabinets, cliniques et centres hospitalier vétérinaires. Dans chaque structure, le transfert de la zone froide (congélateur) au camion frigorifique se fait dans un bac en plastique unique d'une capacité d'environ 200 litres et pourvu d'un couvercle rabattable dans lequel les corps sont introduits collectivement. A l'intérieur du camion frigorifique les corps sont triés pour séparer les cadavres traités de façon collective de ceux traités de façon individuelle ou de façon séparée et identifiable. A destination, les cadavres sont de nouveau manipulés pour être entreposés ou traités directement. La multiplication de ces manipulations sont fatigantes, potentiellement dangereuses, consommatrices de temps et peuvent heurter la sensibilité de certaines personnes, les détenteurs d'animaux pouvant être choqué de constater que leur animal est transporté collectivement dans des bacs en plastique.

Le problème technique posé est de pouvoir limiter les manipulations lors de la collecte, le transport et l'entreposage des cadavres d'animaux familiers tout en respectant le caractère individuel, collectif ou séparé et identifiable du traitement choisi, le tout en limitant le risque de heurter les sensibilités de certaines personnes, comme par exemple les détenteurs des animaux décédés.

On connaît du document US 5586679, un dispositif présentant des cellules individuelles et permettant uniquement le transport et l'entreposage de cadavres d'animaux familiers.

D'autre part, l'élimination de cadavres d'animaux familiers peut être réalisée par incinération ou co-incinération, comme cela est par exemple décrit dans le document JP 2008-256237. Cependant, ces techniques d'incinération ou de co-incinération sont soumises à une réglementation contraignante et sont fortement émettrice de dioxyde de carbone, de particules fines et de polluants dans l'atmosphère. De plus, le dispositif de transport décrit dans ce document permet uniquement un transport individualisé des cadavres des animaux familiers.

Une alternative aux procédures d'incinération ou de co-incinération des cadavres d'animaux familiers est l'hydrolyse alcaline. L'hydrolyse alcaline est inscrite dans la réglementation européenne applicable aux sous-produits animaux non destinés à la consommation humaine. Ce procédé permet, sous certaines conditions, la dissolution des tissus mous, également appelés matières organiques, des cadavres et la neutralisation de tous les agents pathogènes transmissibles connus.

Traditionnellement, le processus d'hydrolyse alcaline est utilisé pour l'élimination de sous-produits animaux dans des dispositifs de grande capacité tels que ceux décrits dans les documents WO 2006/049625 et WO 97/39777. Cette technique est également utilisée pour l'élimination de déchets à haut risque biologique en laboratoire dans des dispositifs de faible capacité. Dans les deux cas, les matières organiques à traiter sont introduites dans un panier unique, perforé, fermé, en alliage d'acier. Ce panier est plongé dans une cuve dans laquelle se réalise la réaction d'hydrolyse alcaline. A la fin du processus, le panier est extrait de la cuve et les résidus solides sont éliminés suivant la réglementation en vigueur.

Ce procédé d'hydrolyse alcaline peut également avoir une application en tant que technique funéraire. En effet, de la même façon que la crémation, les résidus osseux obtenus peuvent être broyés et restitués aux proches. Les émissions dans l'air de dioxyde de carbone, de particules fines et de polluants lors d'une hydrolyse alcaline sont inférieures à celles de la crémation.

Le problème technique de cette méthode appliquée aux cadavres d'animaux familiers est de pouvoir traiter simplement une quantité de matière organique variable en conservant une efficacité optimale du processus d'hydrolyse alcaline conforme à la réglementation en vigueur.

En effet, le dispositif doit permettre de traiter de façon individuelle, de façon collective et de façon séparée et identifiable le ou les cadavres d'animaux dont la masse varie de moins de un kilogramme à plusieurs dizaines de kilogrammes.

Les conditions minimales de pression, température, durée et quantité d'élément alcalin à introduire sont déterminées par la réglementation. L'efficacité de la technique de mélange et le volume de la solution alcaline représentent des variables permettant l'optimisation du processus.

Le dispositif selon l'invention a pour objectif de remédier au moins partiellement à ces problèmes techniques et de traiter de façon individuelle, de façon collective et de façon séparée et identifiable une quantité de matière organique variable en optimisant la technique de mélange et le volume de solution alcaline à utiliser. Le dispositif permet également la collecte, le transport, l'entreposage et la manipulation des cadavres d'animaux familiers.

Afin d'atteindre au moins partiellement au moins un des objectifs précités, la présente invention à pour objet un dispositif modulable de collecte, de transport, d'entreposage, de manipulation et de trempage lors d'un processus d'hydrolyse alcaline pour des cadavres d'animaux familiers, le dispositif comportant comme caractéristique d'être équipé d'une paroi pleine à hauteur réglable permettant d'adapter son niveau de débordement au niveau de remplissage d'une cuve d'hydrolyse dans laquelle se réalise la réaction d'hydrolyse alcaline.

Le dispositif comporte comme caractéristique d'être pourvu d'une paroi supérieure perméable à hauteur variable.

Pour permettre la collecte, le transport, l'entreposage et la manipulation des cadavres d'animaux familiers de façon optimale, le dispositif comporte comme caractéristique d'être équipé de plusieurs ouvertures situées dans des plans différents.

Le dispositif comporte comme caractéristique d'être pourvu d'un système de guidage qui permet de le solidariser à la cuve d'hydrolyse alcaline ou à un système de rayonnage lors du transport et de l'entreposage.

Le dispositif comporte comme caractéristique d'être pourvu de poignées et de pieds permettant son utilisation comme brancard.

Le dispositif comporte comme caractéristique d'être équipé d'au moins deux roues, éventuellement amovibles, permettant son déplacement par un seul utilisateur, à la façon d'un diable de manutention.

Le dispositif comporte comme caractéristique d'être fractionnable par un système de parois internes amovibles et réglables, permettant de le fractionner en différents espaces clos séparés et identifiables.

Les dessins annexés illustrent des modes de réalisation particuliers de l'invention, ces modes de réalisation particuliers sont donnés à titre d'exemples illustratifs et non limitatifs.

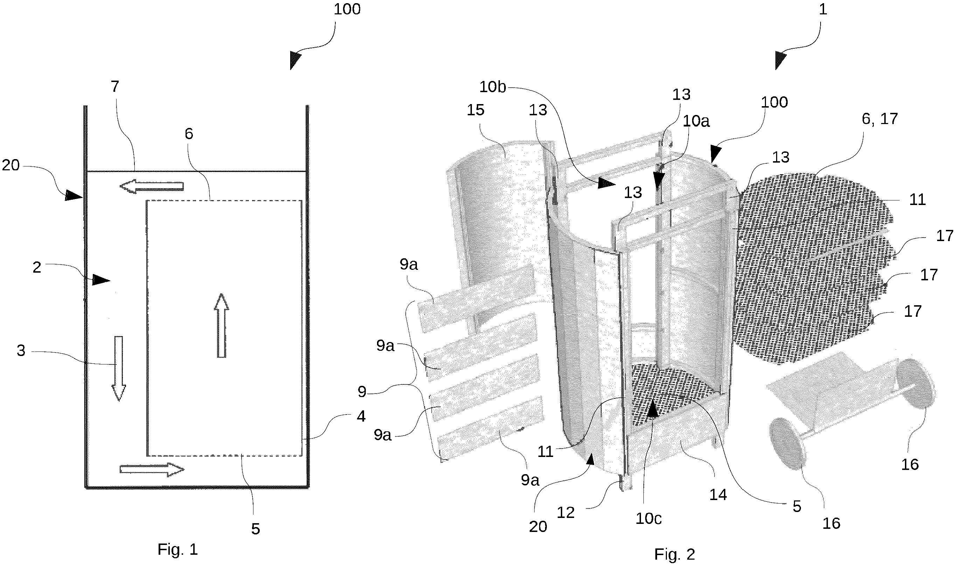

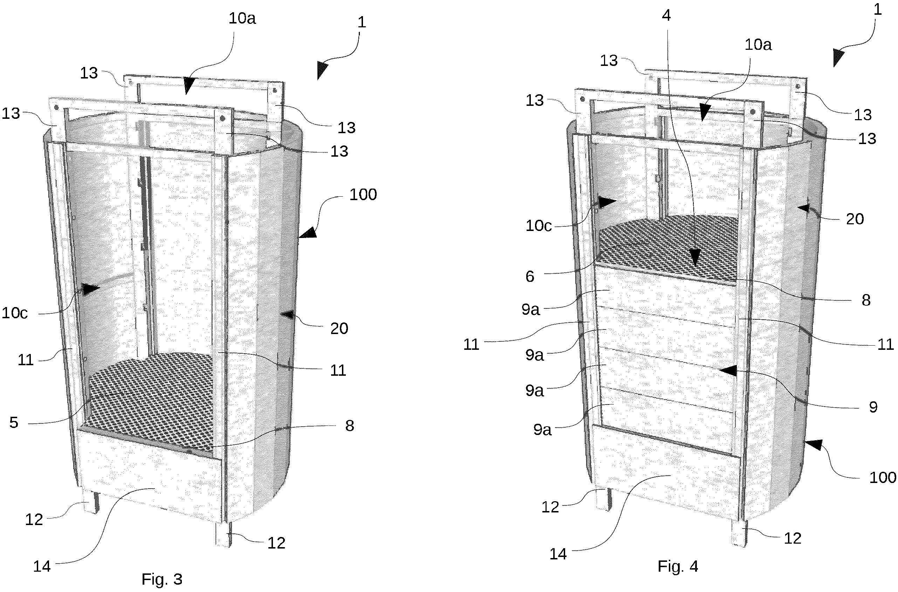

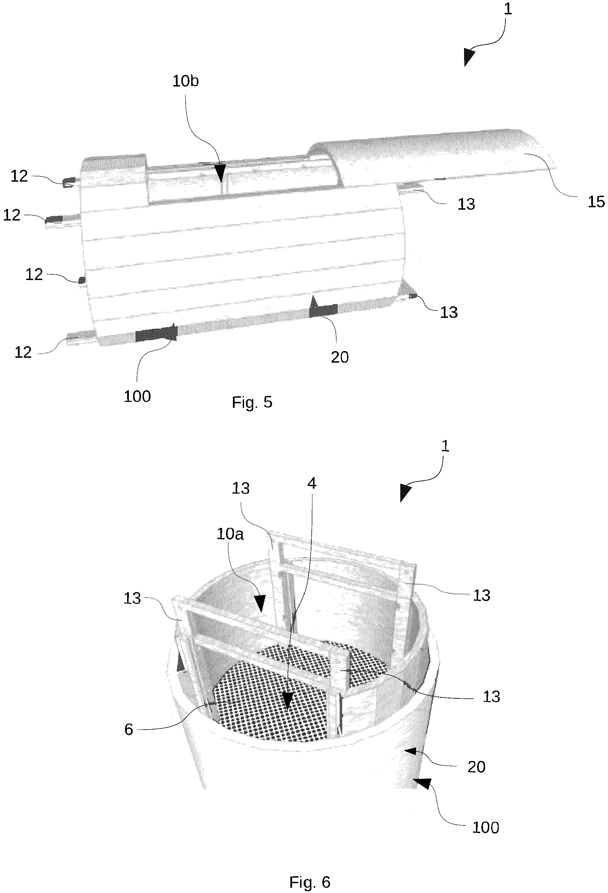

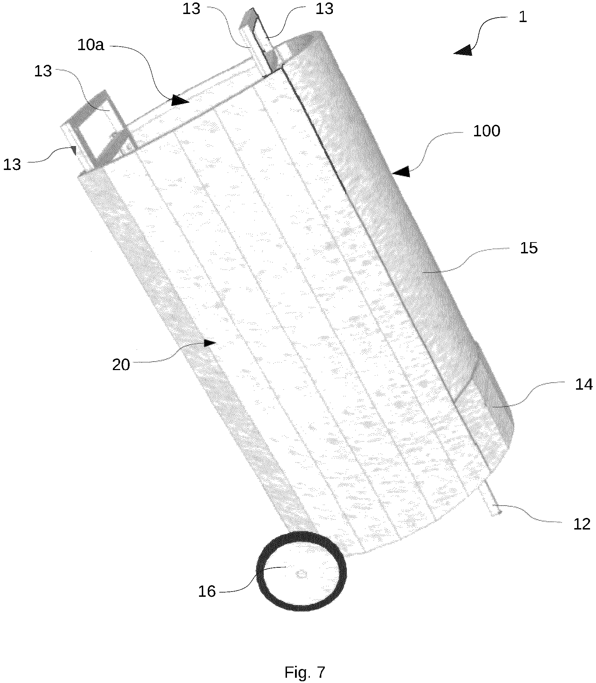

La figure 1 représente le principe général de la technique de mélange. La figure 2 représente une vue éclatée du dispositif avec ces éléments amovibles. La figure 3 représente le dispositif en position verticale réglé pour une capacité minimale. La figure 4 représente le dispositif en position verticale réglé pour une capacité supérieure à celle de la figure 3. La figure 5 représente le dispositif en position horizontale avec l'un de ces systèmes de fermeture en position entre-ouverte. La figure 6 représente le dispositif lors de son introduction dans la cuve d'hydrolyse. La figure 7 représente le dispositif en position inclinée équipé de deux roues.

En référence à la figure 1, il est représenté le principe général de fonctionnement d'une cuve d'hydrolyse 100 alcaline. La cuve d'hydrolyse 100 présente un récipient principal 20 logeant un récipient perméable 4 contenant une matière organique à hydrolyser telle qu'au moins un cadavre d'un animal familier.

La cuve d'hydrolyse 100 contient une solution alcaline 2. Cette solution alcaline 2 est mise en mouvement mécaniquement par un système de pompe ou par un mélangeur (non représentés). Ce système mécanique est situé à l'extérieur du récipient perméable et crée une surpression au fond de la cuve d'hydrolyse 100 et une dépression à sa surface, ce qui crée un flux 3 de solution alcaline 2 dans la cuve d'hydrolyse 100.

Le récipient perméable 4 est pourvu d'un fond perméable 5 et d'une paroi supérieure perméable 6. Le récipient perméable 4 est disposé dans la cuve d'hydrolyse 100 pour que la distance entre le fond de la cuve d'hydrolyse 100 et le fond perméable 5 du récipient perméable 4 soit égale à la distance entre le un niveau de remplissage 7 de la cuve d'hydrolyse 100 et un niveau de débordement 8 du récipient perméable 4. Ainsi le flux 3 de solution alcaline 2 créé traverse le récipient perméable 4 régulièrement de bas en haut, ce qui assure un mélange nécessaire à la réaction d'hydrolyse alcaline. Pour faire varier la capacité d'une cuve d'hydrolyse 100 de dimension donnée, on fait varier son niveau de remplissage 7. Pour maintenir de bonnes conditions de mélange, le niveau de débordement 8 du récipient perméable 4 et sa paroi supérieure perméable 6 sont donc variables.

Le récipient perméable 4 à la solution alcaline 2 est fractionnable et ou empilable. Le ou les cadavres d'animaux familiers sont introduits (directement ou à l'intérieur d'un récipient fermé perméable de plus petite dimension) dans ce récipient perméable 4 de façon individuelle, de façon séparée identifiable ou de façon collective. Le récipient perméable 4 est disposé à l'intérieur du récipient principal 20 où se réalise la réaction d'hydrolyse alcaline.

Dans le mode de réalisation non limitatif des figures 1 à 7, le récipient principal 20 de la cuve d'hydrolyse 100 est en alliage d'acier et présente une forme cylindrique de base de rayon 35 cm et de hauteur 120 cm. Cette forme cylindrique est tronquée par un plan parallèle à sa hauteur délimitant une face plane. D'autre part, cette cuve d'hydrolyse 100 est généralement disposée verticalement. Cette forme et cette disposition permettent son utilisation à une pression d'utilisation réglementaire élevée (plus de 3 bars) et permet de faire varier son niveau de remplissage avec de faible variation de volume de solution alcaline 2. Cette cuve d'hydrolyse 100 est équipée d'un système de chauffage et de mélange (non représenté). De plus, cette cuve d'hydrolyse 100 est fermée hermétiquement à l'aide d'un couvercle (non représenté) afin de permettre sa montée en pression et également de prévenir l'émanation éventuelle d'odeurs de putréfaction liées à une décomposition du cadavre de l'animal familier disposé dans cette cuve d'hydrolyse 100. L'utilisation d'une pression élevée et d'une température élevée, typiquement comprise entre 110°C et 180°C, et plus particulièrement de l'ordre de 150°C, permet d'accélérer le processus d'hydrolyse des matières organiques disposées à l'intérieur de cette cuve d'hydrolyse 100. D'autre part, l'utilisation d'un mélangeur permet une agitation de la solution alcaline 2 à l'intérieur de la cuve d'hydrolyse 1, ce qui contribue à l'efficacité du processus d'hydrolyse alcaline.

La solution alcaline 2 est une solution d'un hydroxyde de métal alcalin ou d'un hydroxyde alcalin de terre rare. La concentration de cette solution alcaline 2 est généralement comprise entre 0,1 et 4 mol.L⁻¹. De plus, cette solution alcaline 2 présente un pH supérieur à 12, et de préférence compris entre 13 et 14, afin de permettre une digestion efficace des matières organiques du (ou des) cadavre(s) d'animal familier disposé à l'intérieur de la cuve d'hydrolyse 100. Typiquement, cette solution alcaline 2 peut être composée par une solution aqueuse d'hydroxyde de sodium (NaOH) ou d'hydroxyde de potassium (KOH). Selon un mode de réalisation particulier, la solution alcaline 2 peut correspondre à une solution d'hydroxyde de sodium dont la concentration est comprise entre 0,1 et 2,5 mol.L⁻¹, soit une concentration massique d'hydroxyde de sodium comprise entre 0,4 % et 10 % en poids.

De manière à assurer une hydrolyse efficace des différentes matières organiques, la concentration de la solution alcaline 2 est ajustée de manière à assurer un excès d'éléments alcalins par rapport aux matières organiques à hydrolyser. Par exemple, un ratio 1:10 en masse d'hydroxyde alcalin par rapport à la masse humide du (ou des) cadavre(s) à hydrolyser permet d'assurer un excès de ces éléments alcalins par rapport aux matières organiques à hydrolyser de manière à ce que cette hydrolyse soit complète. En d'autres termes, la solution alcaline 2 est en excès par rapport aux matières organiques à hydrolyser de manière à ce que la réaction d'hydrolyse soit totale.

Le récipient perméable 4 modulable est réalisé en alliage d'acier et est composé de la façon suivante. Sa forme générale est celle d'un cylindre de base de rayon 35 cm et de hauteur 100cm. Il est tronqué par un plan parallèle à sa hauteur délimitant une face plane. L'espace libéré par cette découpe est occupé par un mobile d'agitation situé dans la cuve d'hydrolyse 100.

En référence aux figures 2 à 4 et 6, il est représenté un dispositif modulable 1 de collecte, de transport, d'entreposage, de manipulation et de trempage lors d'un processus d'hydrolyse alcaline pour les cadavres d'animaux familiers. Un tel dispositif modulable 1 comprend la cuve d'hydrolyse 100 destinée à accueillir au moins un cadavre d'animal familier dans le récipient perméable 4 afin de permettre son hydrolyse alcaline.

Dans sa position verticale, le dispositif modulable 1 peut être pourvu de quatre pieds 12, présentant par exemple une hauteur de 10 cm, disposés au niveau de sa surface inférieur et de quatre poignées 13, présentant une hauteur par exemple de 10 cm, lesdites poignées 13 étant reliées entre elles deux à deux formant ainsi deux anses au niveau d'une partie supérieure de ce dispositif modulable 1.

Lorsqu'ils sont en appui sur le fond de la cuve d'hydrolyse 100, les pieds 12 libèrent un espace nécessaire au dispositif de chauffage afin de permettre la chauffe et de contribuer à la circulation de la solution alcaline 2 à l'intérieur de la cuve d'hydrolyse 100 au cours du processus d'hydrolyse alcaline des matières organiques du (ou des) cadavre(s) d'animaux familiers.

Le récipient principal 20 de la cuve d'hydrolyse 100 est continu et fixe à une base 14 s'étendant sur une hauteur par exemple de 20 cm et sur l'ensemble de sa hauteur sur deux de ses cotés (comme cela est représenté en référence aux figures 2 à 4). Le niveau de débordement 8 du récipient perméable 4 est déterminé par cette enveloppe fixe et notamment par la hauteur de la base 14 du récipient principal 20 qui correspond à la capacité minimale de la cuve d'hydrolyse 100 (figure 3). Plusieurs plaques rectangulaires, pleines et amovibles 9a peuvent coulisser verticalement de haut en bas sur la face plane du récipient principal 20, permettant le réglage de la hauteur du niveau de débordement 8 du récipient perméable 4.

De plus, le récipient principal 20 présente au niveau de sa face plane un système de guidage 11 (visible sur les figures 2 à 4) permettant de solidariser le dispositif modulable 1 à une structure externe (non représentée) lors de la réalisation du processus d'hydrolyse alcaline par exemple, ou encore lors d'une étape de transport de ce dispositif modulable 1 dans un véhicule tel qu'une camionnette par exemple.

Plusieurs parois internes amovibles 17 perméables ayant la forme d'un disque tronqué (visible sur la figure 2) peuvent être introduites par une ouverture supérieure 10a de la cuve d'hydrolyse 100. Pour l'introduction de ces parois internes amovibles 17 dans la cuve d'hydrolyse 100, la partie circulaire de ces parois internes amovibles 17 est inclinée vers le bas du dispositif modulable 1, c'est-à-dire en direction des pieds 12, et la partie plane maintenue horizontalement vers le haut du dispositif modulable 1, c'est-à-dire en direction des poignées 13. Un système d'encoches sur la structure du récipient principal 20 permet le blocage de la paroi interne amovible 17 perméable dans sa partie arrondie à la hauteur désirée. La partie plane est alors abaissée à l'horizontale et solidarisé à la structure du récipient principal 20 par une goupille. Ces parois internes amovibles 17 perméables permettent de fractionner la cuve d'hydrolyse 100 en plusieurs cellules indépendantes permettant le traitement de plusieurs cadavres d'animaux familiers de façon séparée et identifiable. L'une de ces parois interne amovible 17 perméable est pourvue d'une prolongation rectangulaire dans sa partie plane et dans le même plan et correspond à la partie supérieure perméable 6 du récipient perméable 4. Cette plaque interne amovible 17 perméable formant la partie supérieure perméable 6 permet de refermer la partie supérieure du dispositif modulable 1 en bloquant les plaques rectangulaires, pleines et amovibles 9a et représente la paroi supérieure perméable 6 à hauteur variable du récipient perméable 4.

Selon les modes de réalisation des figures 2 à 7, le dispositif modulable de collecte, de transport, d'entreposage, de manipulation et de trempage comporte plusieurs ouvertures 10a, 10b, 10c disposées dans des plans différents afin de faciliter le remplissage de la cuve d'hydrolyse 100 dans différentes positions. Ainsi, le (ou les) cadavre(s) d'animaux à hydrolyser peuvent être introduits dans cette cuve d'hydrolyse 100 par une ouverture supérieure 10a disposée au niveau d'une partie supérieure de cette cuve d'hydrolyse 100, définie entre les poignées 13, ou par une ouverture latérale 10b, 10c disposée entre les pieds 12 et les poignées 13 de la cuve d'hydrolyse 100.

Selon le mode de réalisation de la figure 5, lorsque le dispositif modulable 1 est déposé à l'horizontal sur sa surface plane, une paroi pleine coulissante en forme de cylindre tronqué par un plan 15 peut coulisser horizontalement et crée une large ouverture, particulièrement adaptée à l'introduction d'un cadavre d'un animal de grande taille et à l'utilisation du dispositif modulable 1 de façon individuelle. Cette position horizontale ressemble physiquement à un cercueil.

Selon une alternative pour des animaux de très petite taille, un système de récipient perméable 4 de taille et de formes adaptées peut être introduit à l'intérieur de la cuve d'hydrolyse 100.

D'autre part, en revenant sur le mode de réalisation de la figure 5, le dispositif modulable 1 peut être déplacé par des opérateurs par préhension des pieds 12 et des poignées 13 afin de déplacer ce dispositif modulable 1 à la manière d'un brancard.

Selon le mode de réalisation de la figure 7, lorsque le dispositif est en position verticale, deux roues 16 reliées par un essieu sont adaptables sous le fond du récipient principal 20. Lors de l'inclinaison du dispositif modulable de collecte, de transport, d'entreposage, de manipulation et de trempage, le déplacement de celui-ci se réalise à la façon d'un diable de manutention. Par ailleurs, ces roues 16 peuvent être amovibles.

Lorsque ce dispositif modulable est utilisé de manière à assurer un traitement séparé et identifiable de plusieurs cadavres d'animaux familiers, un premier cadavre est introduit dans ce dispositif sur le fond perméable 5 aussi bien par l'ouverture supérieure 10a que par l'ouverture latérale 10c disposée au niveau de la surface plane du récipient principal 20. Une ou plusieurs plaques rectangulaires pleines et amovibles 9a sont ensuite disposées sur cette ouverture latérale 10c, puis une paroi interne amovible et réglable 17 est introduite par l'ouverture supérieure 10a afin de former une cellule individuelle. Un autre cadavre d'animal familier est ensuite disposé sur cette paroi interne amovible et réglable 17 et les étapes de disposition d'une ou de plusieurs plaques rectangulaires pleines et amovibles 9a et d'une paroi interne amovible et réglable 17 sont répétées. Ces différentes étapes sont répétées jusqu'à ce que le dispositif modulable 1 soit rempli de cadavres d'animaux familiers répartis dans différentes cellules individuelles. Une fois ce dispositif modulable 1 rempli, le récipient principal 20 est fermé par le couvercle. Le dispositif modulable 1 est ensuite déplacé du point de collecte vers un lieu de traitement qui peut être dans la même clinique vétérinaire ou dans un lieu différent. Les différents cadavres d'animaux disposés dans ce dispositif modulable 1 ne sont pas visibles par les personnes extérieures, ainsi le choc des sensibilités de certaines personnes peut être prévenu.

Dans l'éventualité où la collecte des cadavres d'animaux se tiendrait sur différents lieux, il est possible de commencer la collecte à un premier endroit puis de continuer celle-ci vers un autre endroit en déplacement simplement le dispositif modulable 1 à la manière d'un diable de manutention grâce aux roues 16. D'autre part, le dispositif module 1 peut coopérer avec une structure externe, comme par exemple des barres d'attelage disposées à l'intérieur d'une camionnette, à l'aide de son système de guidage 11 afin de prévenir tout déplacement de ce dispositif modulable 1 au cours de son transport à l'aide d'un véhicule automobile.

De plus, dans l'éventualité où le dispositif modulable 1 est utilisé pour un traitement collectif ou un traitement individualisé lorsque le cadavre de l'animal familier est de grande taille, ce ou ces cadavres sont introduits directement dans le dispositif modulable 1 par l'ouverture supérieure 10a ou l'une des ouvertures latérales 10b, 10c et les différentes plaques rectangulaires pleines et amovibles 9a sont disposées soit avant l'introduction du cadavre dans le dispositif modulable 1 soit au fur et à mesure de l'introduction des différents cadavres lorsqu'il s'agit d'un traitement collectif sans disposer les parois internes amovibles et réglables 17 permettant le fractionnement de la cuve d'hydrolyse 100.

Le dispositif modulable 1 est ensuite déchargé à un emplacement de traitement des différents cadavres d'animaux familiers. Ce dispositif modulable 1 peut donc permettre un entreposage des différents cadavres d'animaux familiers avant une étape de traitement ou encore avant une nouvelle étape de collecte dans l'éventualité où ce dernier ne serait pas plein.

Le dispositif modulable 1 permet également la mise en oeuvre du procédé d'hydrolyse alcaline des différents cadavres d'animaux familiers disposés à l'intérieur de celui-ci. Pour ce faire, le couvercle du récipient principal 20 est ôté afin de permettre l'introduction de la solution alcaline 2, dans des proportions et une concentration prédéterminées, à l'intérieur de la cuve d'hydrolyse 100. Afin de faciliter le processus d'hydrolyse alcaline des différentes matières organiques composant les cadavres d'animaux, le dispositif modulable 1 présente un dispositif permettant l'agitation de la solution alcaline 2 à l'intérieur de la cuve d'hydrolyse 100, un dispositif permettant la chauffe de cette solution alcaline 2 et également un dispositif permettant une montée en pression à l'intérieur de la cuve d'hydrolyse 100.

En fin de processus d'hydrolyse alcaline, la cuve d'hydrolyse 100 est vidée de la solution alcaline contenant les matières organiques digérées et le dispositif modulable 1 est ensuite ouvert afin de récupérer les différents éléments non digérés par l'hydrolyse alcaline tels que les ossements ou encore les dents de différents animaux. Les cadavres étant disposés dans des cellules individualisées à l'intérieur du dispositif modulable 1, les différents éléments non digérés sont recueillis sur les parois internes amovibles et réglables 17 des différentes cellules définies, permettant ainsi la restitution de ces différents éléments aux propriétaires des animaux décédés.

Ainsi, les différentes opérations entre la collecte et le traitement des cadavres d'animaux familiers se fait à l'aide du même dispositif modulable 1 ce qui permet notamment de limiter les manipulations de ces cadavres, et donc les temps et risques associés à ces différentes manipulations.

Le dispositif modulable 1 de collecte, de transport, d'entreposage, de manipulation et de trempage, selon l'invention, est particulièrement destiné au domaine du traitement et de l'élimination des cadavres d'animaux familiers.

## Revendications

1. Dispositif modulable (1) de collecte, de transport, d'entreposage, de manipulation et de trempage lors d'un processus d'hydrolyse alcaline pour des cadavres d'animaux familiers, **caractérisé en ce qu'**il comporte une paroi pleine à hauteur réglable (9) permettant un réglage de la hauteur de débordement d'un récipient principal (20).

2. Dispositif modulable (1) de collecte, de transport, d'entreposage, de manipulation et de trempage lors d'un processus d'hydrolyse alcaline pour des cadavres d'animaux familiers, **caractérisé en ce qu'**il comporte une paroi supérieure perméable à hauteur réglable (6) permettant de faire varier la capacité d'un récipient perméable (4).

3. Dispositif modulable (1) de collecte, de transport, d'entreposage, de manipulation et de trempage lors d'un processus d'hydrolyse alcaline pour des cadavres d'animaux familiers, **caractérisé en ce qu'**il comporte plusieurs ouvertures (10a, 10b, 10c) disposées dans des plans différents facilitant le remplissage dans différents positions.

4. Dispositif modulable (1) de collecte, de transport, d'entreposage, de manipulation et de trempage lors d'un processus d'hydrolyse alcaline pour des cadavres d'animaux familiers, **caractérisé en ce qu'**il est équipé d'un système de guidage (11) pouvant le solidariser à une structure externe.

5. Dispositif modulable (1) de collecte, de transport, d'entreposage, de manipulation et de trempage lors d'un processus d'hydrolyse alcaline pour des cadavres d'animaux familiers, **caractérisé en ce qu'**il comporte des pieds (12) et des poignées (13) permettant son déplacement à la façon d'un brancard.

6. Dispositif modulable (1) de collecte, de transport, d'entreposage, de manipulation et de trempage lors d'un processus d'hydrolyse alcaline pour des cadavres d'animaux familiers, **caractérisé en ce qu'**il comporte au moins deux roues (16) éventuellement amovibles permettant son déplacement à la façon d'un diable de manutention.

7. Dispositif modulable (1) de collecte, de transport, d'entreposage, de manipulation et de trempage lors d'un processus d'hydrolyse alcaline pour des cadavres d'animaux familiers, **caractérisé en ce qu'**il comporte des parois internes amovibles réglables (17) permettant de fractionner ledit dispositif modulable (1) en espaces clos séparés et identifiables.
